# EUROPEAN PATENT APPLICATION

(11) **EP 2 058 955 A1**
(43) Date of publication of application: **13.05.2009**
(21) Application number: 06797805.6
(22) Date of filing: 11.09.2006
(51) Int. Cl.: H04B 5/02

(54) **RADIO FREQUENCY IDENTIFICATION IC TAG READER AND RADIO FREQUENCY IDENTIFICATION IC TAG SYSTEM**

(71) Applicant: Hitachi, Ltd., Chiyoda-ku Tokyo 100-8280 (JP)
(72) Inventor: USAMI, Mitsuo, Chiyoda-ku, Tokyo 100-8220 (JP)
(74) Representative: Beetz & Partner
(86) International application number: PCT/JP2006/317986
(87) International publication number: WO 2008/032356

(57) **Abstract**

A reflected electromagnetic wave received, for example, from a wireless identification IC tag through an antenna (105) is processed not by a complicated circuit, but by capacitors (107, 100) and diodes (108, 109). By the combination of the capacitors (107, 100) and the diodes (108, 109), a voltage of the reflected electromagnetic wave is integrated. The reflected electromagnetic wave becomes different in voltage depending on a signal "0" and a signal "1" from the wireless identification IC tag. As a result, since an integrated value outputted to a reception signal line (113) becomes also different, it is possible to discriminate the signal "0" and the signal "1" in the reader for wireless identification IC tag. Since integration is utilized, even a week signal can be discriminated.

## Description

### TECHNICAL FIELD

The present invention relates to a reader for a wireless identification IC tag and a wireless identification IC tag system wirelessly performing identification, and belongs to a technical field forming an economical circuit.

### BACKGROUND ART

A wireless identification IC tag has an excellent function than a conventional bar-code because of its reading performance, security, compactness, and the like. This wireless identification IC tag is considered to come into wide use according to an improvement of its economical efficiency. In this case, a reader for the wireless identification IC tag is mounted even in a mobile terminal, and therefore, a necessity for simply reading the wireless identification IC tag at any place arises. Consequently, a simple circuit for economically fabricating the reader for the wireless identification IC tag is required.

Patent Document 1 (Japanese Patent Application Laid-Open Publication No. 2005-101892) discloses a method for simply performing control of a wireless identification IC tag and a reader for the wireless identification IC tag with a reflected modulated signal by a delay element in communications performed by using a backscatter system.

Patent Document 2 (Japanese Patent Application Laid-Open Publication No. 2000-49654) discloses a method for simply performing control of a wireless identification IC tag and a reader for the wireless identification IC tag by setting the antenna output electric power from the reader to two kinds of antenna output electric powers having a double intensity difference at predetermined constant intervals of time.
Patent Document 1: Japanese Patent Application Laid-Open Publication No. 2005-101892
Patent Document 2: Japanese Patent Application Laid-Open Publication No. 2000-49654

### DISCLOSURE OF THE INVENTION

### PROBLEMS TO BE SOLVED BY THE INVENTION

The present invention provides a simple circuit to mount a reader for a wireless identification IC tag in a mobile terminal. An UHF bandwidth and a 2.45 GHz bandwidth are effective frequencies for an expansion of the communication distance for the wireless identification IC tag. However, since they are high in frequencies as compared with a 13.56 MHz bandwidth and a 125 kHz bandwidth, a receiver circuit has been complicated. Hence, it has been difficult to simplify the circuit, and due to the circuit scale and the consumption electric power being large, accommodation into the mobile terminal has been difficult. If it is a simplified circuit, it will be advantageous even in case it is made into an integral circuit of one chip, but in the conventional documents, no disclosure of such an introduction of efficiency has been made.

### MEANS FOR SOLVING THE PROBLEMS

The typical ones of the inventions disclosed in this application will be briefly described as follows.

A reader for a wireless identification IC tag according to the present invention processes a reflected electromagnetic wave from the wireless identification IC tag not by a complicated circuit, but by a capacitor and a diode. A voltage of the reflected electromagnetic wave is integrated by a combination of the capacitor and the diode. The reflected electromagnetic wave becomes different in voltage depending on a signal "0" and a signal "1" from the wireless identification IC tag. As a result, the integrated value becomes also different, and it is therefore possible to identify the signal "0" and the signal "1" in the reader for the wireless identification IC tag. By having a construction to identify the reflected electromagnetic wave by the integral circuit in this manner, the reader for the wireless identification IC tag can be realized in a small circuit scale. Further, since an integral is utilized, even a week signal can be identified.

### EFFECTS OF THE INVENTION

To briefly describe effects obtained by a typical aspect of the invention disclosed in the present application, a reader for a wireless identification IC tag and a wireless identification IC tag system having a small number of elements and excellent in economic efficiency can be realized.

### BRIEF DESCRIPTIONS OF THE DRAWINGS

FIG. 1 is a diagram illustrating a circuit of a reader for wireless identification IC tag of the present invention;
FIGs. 2A - 2D are diagrams illustrating waveforms of the reader for wireless identification IC tag of the present invention;
FIGs. 3A - 3D are other diagrams illustrating waveforms of the reader for wireless identification IC tag of the present invention;
FIG. 4 is another diagram illustrating a circuit of a reader for wireless identification IC tag of the present invention;
FIG. 5 is another diagram illustrating a circuit of a reader for wireless identification IC tag of the present invention;
FIG. 6 is a diagram illustrating a configuration example of a wireless identification IC tag system of the present invention; and
FIG. 7 is a diagram illustrating a circuit of a reader for wireless identification IC tag studied as a premise of the present invention.

### BEST MODE FOR CARRYING OUT THE INVENTION

Hereinafter, embodiments of the present invention will be described in detail with reference to the accompanying drawings. Note that components having the same function are denoted by the same reference symbols throughout the drawings for describing the embodiment, and the repetitive description thereof will be omitted.

### (First Embodiment)

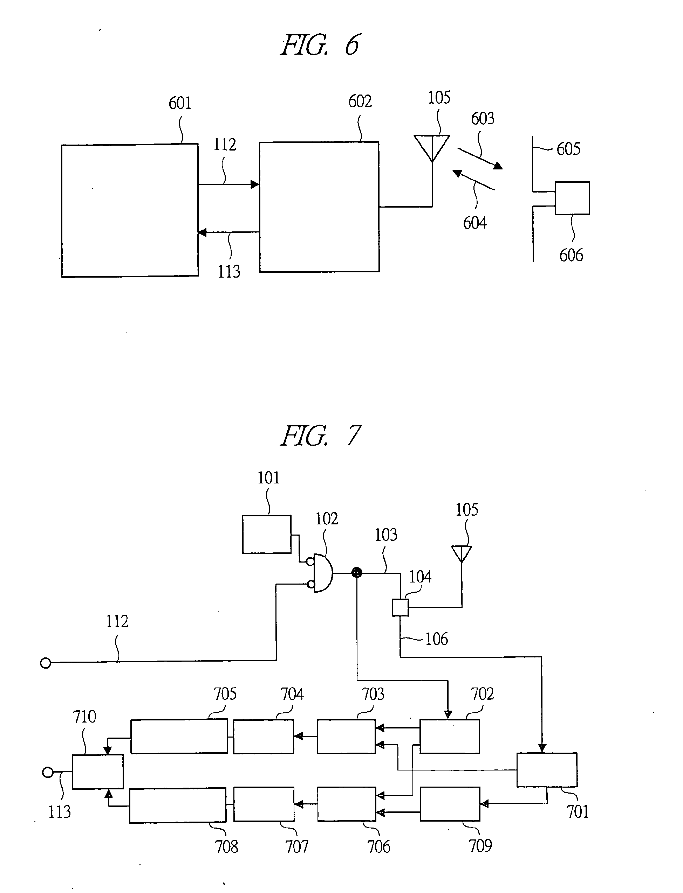

To describe the embodiments of the present invention, a positioning of a wireless identification IC tag and a reader for wireless identification IC tag in the present invention will be described. FIG. 6 is a diagram illustrating a configuration example of the wireless identification IC tag system of the present invention. The wireless identification IC tag system of the present invention is configured by the reader for wireless identification IC tag including a transmitting and receiving circuit 602, an antenna 105 and a control circuit (first circuit) 601, and the wireless identification IC tag including a wireless identification IC tag chip 606 and a wireless identification IC tag antenna 605, and so forth. The control circuit 601 can be also provided outside of the reader for the wireless identification IC tag depending on circumstances.

At the time of performing wireless communications, first, a control signal 112 is transmitted to the transmitting and receiving circuit 602 from the control circuit 601. Upon receipt of the control signal line 112, the antenna 105 connected to the transmitting and receiving circuit 602 transmits a transmission electromagnetic wave 603. The wireless identification IC tag chip 606 is mounted with the wireless identification IC tag antenna 605, and receives the energy and signal of the transmission electromagnetic wave 603. This energy enables an internal voltage of the wireless identification IC tag chip 606 to increase by a rectification circuit provided inside the wireless identification IC tag chip 606, thereby putting the chip into an operable state. Further, the wireless identification IC tag chip 606 is operated according to a modulating signal from the transmission electromagnetic wave 603, thereby operating an internal memory circuit. Information in a memory is transmitted to the antenna 105 one bit by one bit by the reflected electromagnetic wave 604. The received signal is demodulated by the transmitting and receiving circuit 602, and is transmitted to the control circuit 601 by a reception signal line 113. A received signal is processed inside the control circuit 601, and is effectively utilized as being connected to a network or a personal computer, a mobile terminal, and the like and delivered to a software for application.

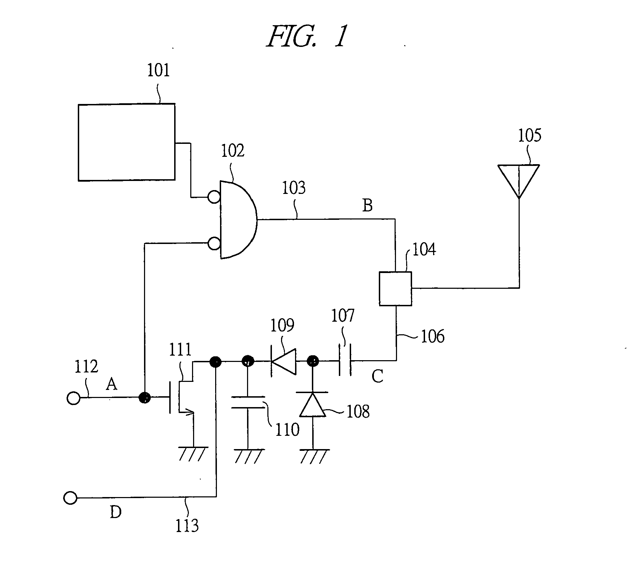

FIG. 1 is a diagram illustrating a circuit of the reader for wireless identification IC tag of the present invention. A high-frequency generator 101 is connected to a NOR circuit 102. A control signal line 112 is also connected to this NOR circuit. An output from the NOR circuit 102 is inputted to a circulator 104 as a transmission line 103. The circulator 104 is connected with the antenna 105, and a reflected wave reception signal from the antenna 105 is outputted to a reception line 106.

The reception signal of the reception line 106 is inputted to a first capacitor 107. This first capacitor 107 plays a role of fixing an amplitude voltage of the reception signal. An output of this first capacitor 107 is inputted to a first diode 108 and a second diode 109. This first diode 108 plays a role of fixing the lowest level of the reception signal. The second diode 109 has a role of transmitting the energy to one direction. An output of the second diode 109 is connected to a second capacitor 110. The second capacitor 110 has a role of accumulating the energy from the second diode 109. A function of discharging the energy of the second capacitor at right timing is realized by a MOS transistor 111 to serve as a switch. The MOS transistor 111 is controlled by the control signal line 112. An output of the second capacitor 110 is outputted as the reception signal line 113. In this manner, the circuit of the present invention requires only one system, and it is unnecessary to prepare a circuit of two systems such as a first detector circuit and a second detector circuit as shown in FIG. 7.

FIG. 7 is a diagram illustrating a circuit of a reader for wireless identification IC tag which performs detection by frequency. A high-frequency generator 101 is connected to a NOR circuit 102. A control signal line 112 is also connected to this NOR circuit. An output from the NOR circuit 102 is inputted to a circulator 104 as a transmission line 103. The circulator 104 is connected with an antenna 105, and a reflected wave reception signal from the antenna 105 is outputted to a reception line 106. High frequency signals of the reception line 106 and the transmission line 103 are divided into two signals by a first two-way distributor 701 and a second two-way distributor 702, respectively. One of two output signals of the first two-way distributor 701 is phase-shifted by a 90-degree phase shift circuit 709. The first detection circuit 703 detects a signal by using one line of the signal distributed into two signals by the first two-way distributor 701 and the second two-way distributor 702. Specifically, a high-speed mixer circuit and the like are employed. An output of this signal is amplified by a first amplifier circuit 704, and further, it is regenerated by a first data regeneration circuit 705 using a band-pass filter and the like, and is inputted to an OR circuit 710.

A second detection circuit 706 detects a signal by using one line of the signal distributed into two signals by the first two-way distributor 701 and the second two-way distributor 702. A point different from the first detection circuit 703 is that a signal phase-shifted by the 90-degree phase shift circuit 709 is entered. For this circuit, specifically, a high-speed mixer circuit and the like are employed. An output of this signal is amplified by a second amplifier circuit 707, and further, it is regenerated by a second data regeneration circuit 708 using a band-pass filter and the like, and is inputted to the OR circuit 710. An output of the OR circuit 710 is outputted to a reception signal line 113. In this manner, since the detection is made by high frequencies of the transmission signal, for example, by the frequencies such as 950 MHz of the UHF bandwidth and 2.45 GHz bandwidth, a phase fluctuation of a reception wave occurs by depending on a communication distance between the wireless identification IC tag and the reader for wireless identification IC tag, and a phase-shift function to compensate for this fluctuation has been given, thereby increasing the circuit scale. According to the configuration described in FIG. 1, it is possible to simply configure the receiving circuit.

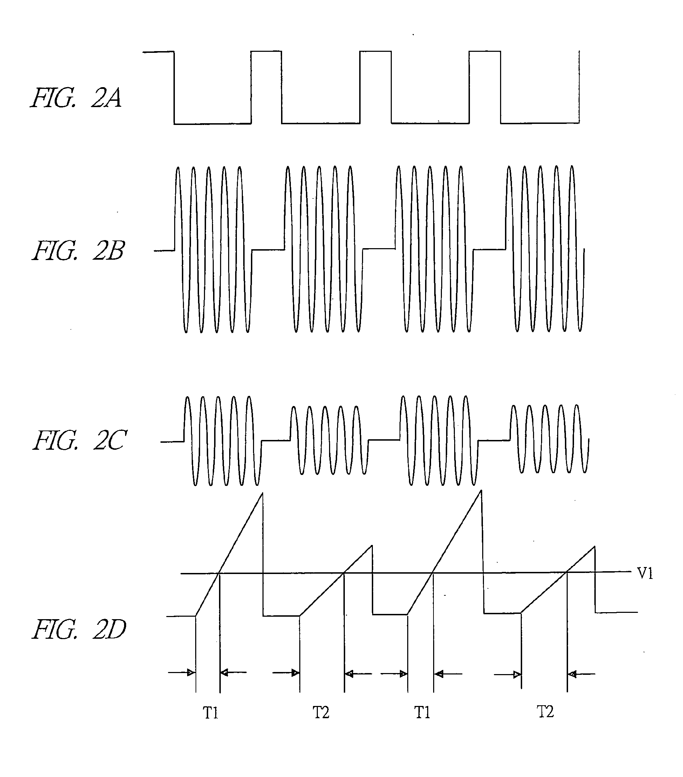

FIG. 2A - 2D are diagrams illustrating waveforms of the reader for wireless identification IC tag of the present invention. A waveform A shows a signal of the control signal line 112 of FIG. 1. A waveform B shows a signal of the transmission line 103 of FIG. 1. A waveform C shows a signal of the reception line 106 of FIG. 1. A waveform D shows a signal of the reception signal line 113 of FIG. 1. By a signal A, the signal of the high-frequency generator 101 is controlled by the NOR circuit 102, and a waveform like the signal B is outputted. At the same time, by the signal A, the MOS transistor 111 is turned off after being turned on, so that charges of the second capacitor 110 is discharged.

A signal C is a signal from the wireless identification IC tag, and is divided into a signal having large amplitude and a signal having small amplitude. The one having large amplitude indicates a logic "1", and the one having small amplitude indicates a logic "0". A signal D is a value outputted by integrating the signal C. This integration is performed in such a manner that charges stored by the first capacitor 107 and the first diode 108 are rectified by the second diode 109, thereby accumulating the charges on the second capacitor 110. If the time to reach a voltage V1 shown in FIG. 2D is measured by the control circuit 601, "1" or "0" can be discriminated. That is, as shown in FIG. 2, assuming that the time to reach V1 is taken as T1 or T2, if T1 is smaller than T2, it is shown as "1" in the case of T1, and it is shown as "0"in the case of T2. Since T1 and T2 may be relatively compared with each other, an accuracy of the measurement can be increased. By the comparison, it is possible to discriminate whether the data from the wireless identification IC tag chip 606 of FIG. 6 is "0" or "1" and make out an ID number of the wireless identification IC tag chip 606 of FIG. 6 by the transmitting and receiving circuit 602 and the control circuit 601 of FIG. 6.

As described above, when the detection is performed by using the rectification and integral circuits, the reader for wireless identification IC tag and the wireless identification IC tag system excellent in economical efficiency in terms of the circuit scale or the electric power consumption can be realized. Further, since active elements are not contained inside these detection circuits, a stable operation can be realized. Still further, since integration is utilized, weak signals can be handled. Note that, such a detection circuit can take the same structure even in the receiving circuit of the wireless identification IC chip 606 shown in FIG. 6.

### (Second Embodiment)

A reader for wireless identification IC tag described in this embodiment uses the same circuit configuration as that of FIG. 1 and uses a crest value of the reception waveform of D in FIG. 1 as a means of discrimination.

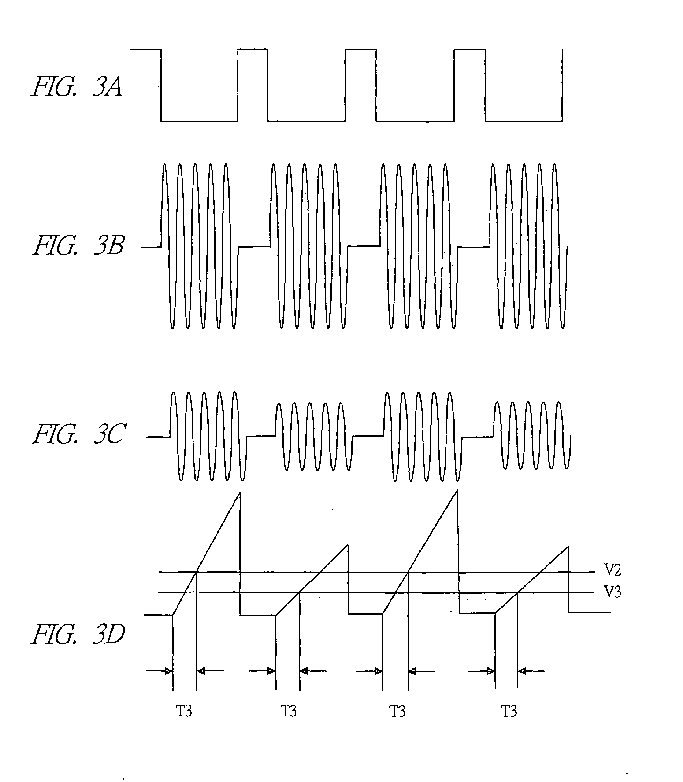

FIG. 3A - 3D are other diagrams illustrating waveforms of the reader for wireless identification IC tag of the present invention. A waveform A shows a signal of the control signal line 112 of FIG. 1. A waveform B shows a signal of the transmission line 103 of FIG. 1. A waveform C shows a signal of the reception line 106 of FIG. 1. A waveform D shows a signal of the reception signal line 113 of FIG. 1. By the signal A, the signal of the high-frequency generator 101 is controlled by the NOR circuit 102, and a waveform like the signal A is outputted. At the same time, the MOS transistor 111 is turned off by the signal A after being turned on, so that the charges of the second capacitor 110 is discharged. the signal C is a signal from the wireless identification IC tag, and is divided into a signal having large amplitude and a signal having small amplitude. The signal having large amplitude indicates a logic "1", and the signal having small amplitude indicates a logic "0". The signal D is a value outputted by integrating the signal C.

As shown in FIG. 3, the sample time of the signal D is fixed as T3, and when assuming that the voltage at this point is taken as V2 or V3, if V2 is larger than V3, it is indicated as "1" in the case of V2, and it is indicated as "0" in the case of V3. Since V2 and V3 may be relatively compared with each other, it becomes possible to increase accuracy. The two voltages can increase a reading resolution by being compared with a high degree of accuracy by using a differential amplifier circuit and the like inside the control circuit 601.

### (Third Embodiment)

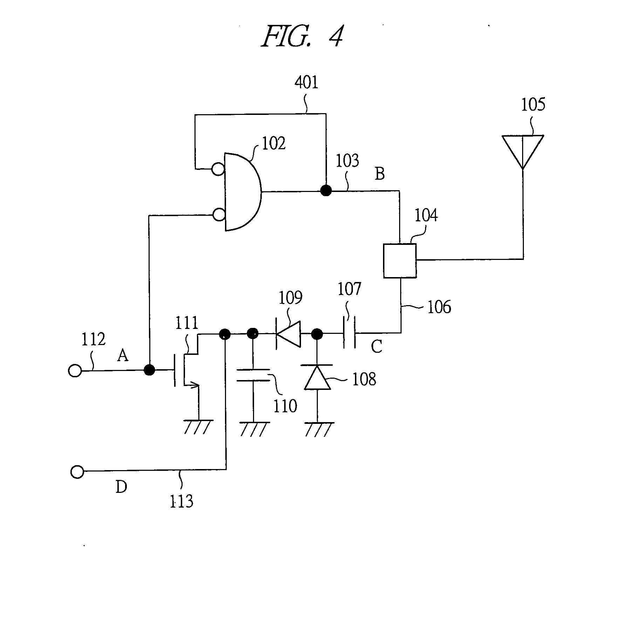

FIG. 4 is another diagram illustrating a circuit of a reader for wireless identification IC tag of the present invention. An output from the NOR circuit 102 is returned to the input by a feedback line 401, and has a self-oscillating function. A control signal line 112 is also connected with this NOR circuit. An output from a NOR circuit 102 is inputted to a circulator 104 as a transmission line 103. The circulator 104 is connected with an antenna 105, and a reflected wave reception signal from the antenna 105 is outputted to a reception line 106. The reception signal of the reception line 106 is inputted to a first capacitor 107. This first capacitor 107 plays a role of fixing an amplitude voltage of the reception signal. An output of this first capacitor 107 is inputted to a first diode 108 and a second diode 109. This first diode 108 plays a role of fixing the lowest level of the reception signal. The second diode 109 has a role of transmitting the energy to one direction. An output of the second diode 109 is connected to a second capacitor 110. The second capacitor 110 has a role of accumulating the energy from the second diode 109. A function of discharging the energy of the second capacitor at right timing is realized by a MOS transistor 111.

This circuit of FIG. 4 does not require a special high-frequency oscillator. Hence, it becomes possible to reduce the circuit scale. A signal of the control signal line 112 makes the performance of the control to the second capacitor common through control of a high-frequency oscillator and the MOS transistor 111, thereby making the circuit simple. Waveform as the result of this simplification is the same as the waveforms illustrated in FIGs. 2A - 2D and 3A - 3D.

### (Fourth Embodiment)

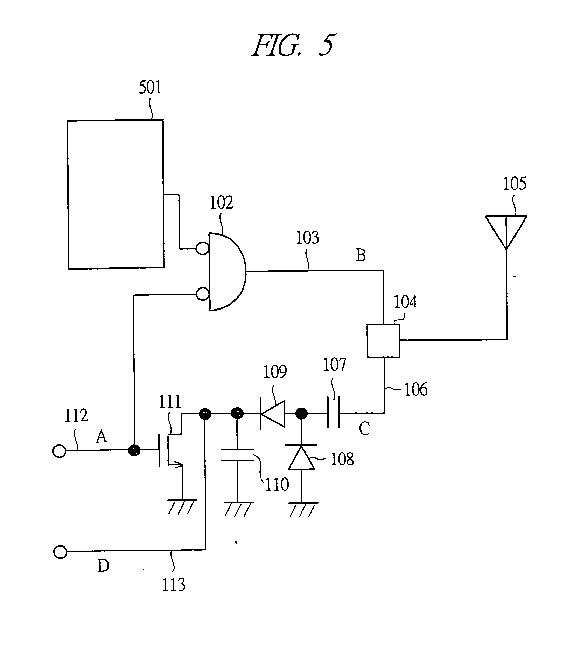

FIG. 5 is another diagram showing a circuit of a reader for wireless identification IC tag of the present invention. By a high frequency generating circuit 501 by Bluetooth, a high frequency is generated and inputted to a NOR circuit 102. A control signal line 112 is also connected with this NOR circuit. An output from a NOR circuit 102 is inputted to a circulator 104 as a transmission line 103. The circulator 104 is connected with an antenna 105, and a reflected wave reception signal from the antenna 105 is outputted to a reception line 106. The reception signal of the reception line 106 is inputted to a first capacitor 107. This first capacitor 107 plays a role of fixing an amplitude voltage of the reception signal. An output of this first capacitor 107 is inputted to a first diode 108 and a second diode 109. This first diode 108 plays a role of fixing the lowest level of the reception signal. The second diode 109 has a role of transmitting the energy to one direction. An output of the second diode 109 is connected to a second capacitor 110. The second capacitor 110 has a role of accumulating the energy from the second diode 109. A function of discharging the energy of the second capacitor at right timing is realized by a MOS transistor 111.

Bluetooth is a near-field communication system operating at 2.45 GHz. It is often the case that this system is practiced in use in a mobile terminal also. Hence, practical use of this oscillating function of Bluetooth is effective as bringing about simplification to make the circuit common. Waveforms are the same as those of FIGs. 2A - 2D and 3A - 3D. Further, even if Bluetooth is employed, other circuit configurations remain unchanged from the first embodiment. While there are various circuits for the high-frequency oscillator, there is a feature of allowing a shared use with original Bluetooth functions by employing Bluetooth.

In the foregoing, the invention made by the inventor of the present invention has been concretely described based on the embodiments. However, it is needless to say that the present invention is not limited to the foregoing embodiments and various modifications and alterations can be made within the scope of the present invention.

### INDUSTRIAL APPLICABILITY

The reader for wireless identification IC tag of the present invention is a technique advantageously applied to mobile equipments requiring down-sizing, particularly, such as mobile phones and PDA (Personal Digital Assistant), and it is not limited to these, but is widely applicable to various wireless communication equipments.

## Claims

1. A reader for wireless identification IC tag receiving a reflected electromagnetic wave from a wireless identification IC tag, the reader for wireless identification IC tag comprising:
a receiving circuit integrating the reflected electromagnetic wave; and
a first circuit discriminating an intensity of the reflected electromagnetic wave based on a signal integrated by the receiving circuit.

2. The reader for wireless identification IC tag according to claim 1, wherein
the first circuit discriminates the intensity of the reflected electromagnetic wave by a comparison of relative intensities before and after.

3. The reader for wireless identification IC tag according to claim 1, wherein
the reader for wireless identification IC tag comprises a first signal to serve as a trigger at the time of transmitting a transmission electromagnetic wave toward the wireless identification IC tag, and
an integral value at the receiving circuit is reset with synchronizing with the first signal.

4. The reader for wireless identification IC tag according to claim 1, wherein
the reader for wireless identification IC tag has a Bluetooth circuit for performing Bluetooth communications, and generates a transmission electromagnetic wave to be transmitted toward the wireless identification IC tag by using an oscillating function of the Bluetooth circuit together.

5. The reader for wireless identification IC tag according to claim 1, wherein
the reader for wireless identification IC tag is provided in a mobile phone.

6. A reader for wireless identification IC tag comprising:
a high-frequency generator generating a transmission electromagnetic wave;
a second circuit outputting the transmission electromagnetic wave generated by the high-frequency generator with synchronizing with a first signal;
an antenna transmitting the transmission electromagnetic wave outputted by the second circuit toward the wireless identification IC tag, and receiving a reflected electromagnetic wave from the wireless identification IC tag;
a diode rectifying the reflected electromagnetic wave received by the antenna;
a capacitor storing an integral value of a signal rectified by the diode; and
a switch discharging the capacitor with synchronizing with the first signal, wherein
the integral value stored by the capacitor is discriminated, thereby obtaining information from the wireless identification IC tag.

7. The reader for wireless identification IC tag according to claim 6, wherein
the second circuit is a NOR circuit to which an output of the high-frequency generator and the first signal are inputted.

8. The reader for wireless identification IC tag according to claim 6, wherein
the high-frequency generator and the second circuit are realized by a NOR circuit to which a feedback signal of an output and the first signal are inputted.

9. A wireless identification IC tag system comprising a wireless identification IC tag and a reader for wireless identification IC tag, the reader for wireless identification IC tag transmitting a transmission electromagnetic wave toward the wireless identification IC tag, and the reader for wireless identification IC tag receiving a reflected electromagnetic wave from the wireless identification IC tag, wherein
the reader for wireless identification IC tag includes:
a receiving circuit integrating the reflected electromagnetic wave; and
a first circuit discriminating an intensity of the reflected electromagnetic wave based on a signal integrated by the receiving circuit.

10. The wireless identification IC tag system according to claim 9, wherein
the first circuit discriminates the intensity of the reflected electromagnetic wave by a comparison of relative intensities before and after.

11. The wireless identification IC tag system according to claim 9, wherein
the reader for wireless identification IC tag has a first signal to serve as a trigger at the time of transmitting an electromagnetic wave toward the wireless identification IC tag, and
an integral value at the receiving circuit is reset with synchronizing with the first signal.
